**Europäisches Patentamt**

**European Patent Office**

**Office européen des brevets**

(19)

(11) Veröffentlichungsnummer: **0 225 520**
**B1**

(12) **EUROPÄISCHE PATENTSCHRIFT**

(45) Veröffentlichungstag der Patentschrift:
**25.10.89**

(21) Anmeldenummer: **86116111.5**

(22) Anmeldetag: **20.11.86**

(51) Int. Cl.⁴: **G01N 1/22**, G01N 31/22,
G01N 21/78

(54) **Prüfröhrchen.**

(30) Priorität: **04.12.85 DE 3542780**

(43) Veröffentlichungstag der Anmeldung:
**16.06.87 Patentblatt 87/25**

(45) Bekanntmachung des Hinweises auf die Patenterteilung:
**25.10.89 Patentblatt 89/43**

(84) Benannte Vertragsstaaten:
**AT BE DE FR GB IT NL**

(56) Entgegenhaltungen:
**DE-A- 3 131 698**
**DE-B- 2 854 421**
**GB-A- 2 127 961**
**GB-A- 2 129 933**
**US-A- 2 549 974**

(73) Patentinhaber: **AUERGESELLSCHAFT GMBH,**
**Thiemannstrasse 1, D-1000 Berlin 44(DE)**

(72) Erfinder: **Kretschmer, Wolfgang, Reichsstrasse 97,**
**D-1000 Berlin 19(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Prüfröhrchen nach dem Oberbegriff des Anspruchs 1.

Es ist ein Verfahren zur Bestimmung von schädlichen Schwebstoffen in Gasen bekannt, bei dem ein Prüfröhrchen benutzt wird, welches mit Quarzwatte als Filter für die Schwebstoffe gefüllt ist, und sich hinter der Quarzwatte ein Puffer und ein Stück Reagenzpapier befinden (DE–A 3 131 698).

Um die auf der Quarzwatte abgeschiedenen Schwebstoffe in ihrer tatsächlichen Konzentration auf dem Reagenzpapier nachweisen zu können, wird das Prüfröhrchen nach dem Durchsaugen des Gases senkrecht mit der Quarzwatte nach oben gestellt und die Quarzwatte mit Salpetersäure und destilliertem Wasser getränkt, um die Schwebstoffe in der Quarzwatte zu lösen, so daß diese auf das Reagenzpapier gelangen und dort nachgewiesen werden. Das unregelmäßig geformte Fadengewirr aus Quarz, läßt hierbei die Prüfluft ungleichmäßig am Reagenzpapier vorbeiströmen.

Bei einem bekannten Prüfröhrchen der gattungsgemäßen Art, wird der mit einer Nachweisreagenz imprägnierte Reagenzstreifen mit einem körnigen Füllmaterial dicht an der Innenwand des Prüfröhrchens gehalten (GB–A 2 127 961; DE–A 3 236 792). Hierbei ist als Nachteil anzusehen, daß das körnige Füllmaterial durch schwankende Korngröße und Packungsdichte örtlich stark unterschiedliche Prüfgas-Strömungen verursachen kann, was bei dem hoch empfindlichen Reagenzstreifen zu Unregelmäßigkeiten und somit Ungenauigkeiten in der Anzeige führen kann. Darüber hinaus besteht auch die Gefahr, daß sich beim Füllen und Festlegen des körnigen Füllmaterials Staub bilden kann, der sich auf dem Reagenzstreifen ablagert, was zu Störungen und Verfälschungen der Anzeige führen kann.

Der Erfindung liegt daher die Aufgabe zugrunde, ein Prüfröhrchen zu schaffen, bei dem kleinste Konzentrationen von Gaskomponenten gemessen und am empfindlicher Reagenzstreifen mit hoher Genauigkeit nachgewiesen werden können.

Die Aufgabe wird erfindungsgemäß durch ein Prüfröhrchens des Patentanspruchs 1 gelöst.

Die mit der Erfindung erzielten Vorteile bestehen insbesondere darin, daß die mittels Luftförderpumpe durch das Prüfröhrchen geförderte Prüfluft gezwungen wird, in ihrer Vorwärtsbewegung vor dem Reagenzstreifen soweit gedrosselt bzw. erniedrigt zu werden, daß die Prüfluft langsam und gleichmäßig am Reagenzstreifen vorbeiströmt und dadurch eine eindeutig bestimmbare Anzeige gewährleistet.

Ein Ausführungsbeispiel ist in der Zeichnung dargestellt und wird im folgenden näher beschrieben. Es zeigt:

Fig. 1 einen Längsschnitt eines Prüfröhrchens mit Reagenzstreifen und einer erfindungsgemäßen Strömungsdrossel und

Fig. 2 einen Längsschnitt eines Prüfröhrchens mit Reagenzstreifen und einer anderen Ausführung der erfindungsgemäßen Strömungsdrossel.

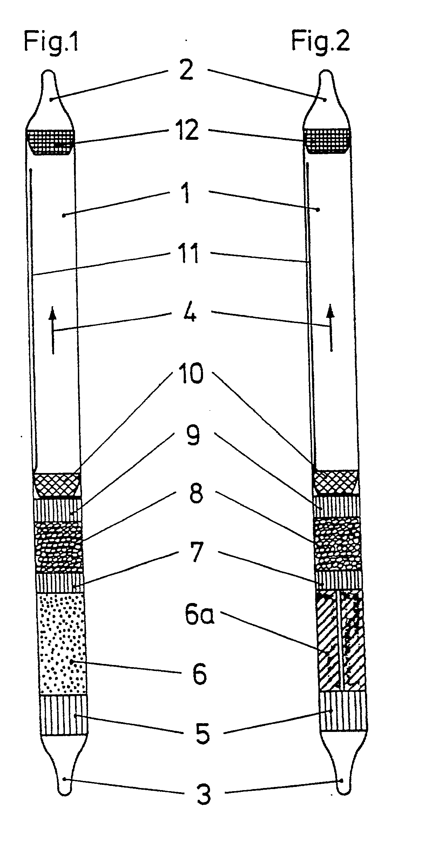

Wie aus Fig. 1 und 2 ersichtlich ist, besitzt ein Prüfröhrchen 1 in Form eines Glasröhrchens abgeschmolzene Enden 2 und 3. In Durchströmungsrichtung 4 der Prüfluft sind im Prüfröhrchen 1 folgende Bauteile angeordnet:

Ein für den Prüfluftstrom durchlässigen Halterungsbaustein 5, eine Strömungsdrossel 6 in Form einer Schicht eines feinkörnigen, chemisch inerten Materials (Fig. 1) oder eine Strömungsdrossel 6a in Form eines Kapillarrohrs (Fig. 2), ein gasdurchlässigen Halterungsbaustein 7, eine körnige Sorptions- bzw. Reaktionsschicht 8, ein gasdurchlässiger Halterungsbaustein 9, ein gasdurchlässiges Halterungselement 10 zum Festlegen eines Reagenzstreifens 11 in Längsrichtung in dem Prüfröhrchen 1 und zum Abschluß ein weiterer gasdurchlässiger Halterungsbaustein 12.

Die gasdurchlässigen Halterungsbausteine 5, 7, 9 und 12 bestehen aus Kunststoff, Glas, Keramik oder Metall.

Der Reagenzstreifen 11 enthält ein Nachweisreagenz für den jeweils zu bestimmenden Bestandteil in der zu untersuchenden Luft bzw. Gas, wobei die Nachweisreaktion unter Farbänderung verläuft. Hierbei besteht der Reagenzstreifen 11 aus einem saugfähigen Material, wie beispeilsweise aus Papier, Karton oder Textil, auf dem das Nachweisreagenz imprägniert ist.

Der Reagenzstreifen 11 kann aber aus einem nicht-saugfähigen Träger, wie beispielsweise Kunststoff oder Metall, bestehen, auf dem eine Schicht eines saugfähigen feinkörnigen Materials aufgebracht ist, das in geeigneter Weise mit dem Nachweisreagenz imprägniert ist.

Die vor dem Reagenzstreifen 11 angeordnete Strömungsdrossel 6 ist nach Fig. 1 eine feinkörnige Schicht aus chemisch inertem Material, welches vorzugsweise eine gleichmäßige Körnung aufweist, beispielsweise Kugeln gleicher Größe. Hierdurch wird ein definierter Strömungswiderstand erzielt und somit eine gleichmäßige Strömungsverteilung des Prüfgases. Diese Schicht wirkt als sogen. Strömungsdrossel. Sie soll die mittels der Luftförderpumpe durch das Prüfröhrchen 1 geförderte Prüfluft in ihrer Vorwärtsbewegung soweit drosseln bzw. erniedrigen, daß die Prüfluft langsam am Reagenzstreifen vorbeiströmt. Auf diese Weise kann sich der empfindliche Reagenzstreifen zonenförmig verfärben und eine eindeutig bestimmbare Anzeige gewährleisten.

In Fig. 2 ist die Strömungsdrossel 6a ein in das Glasröhrchen randdicht eingesetztes Kapillarrohr mit definierter Öffnung und Länge, welches eine ähnliche Wirkung wie die oben in Fig. 1 beschriebene Schicht 6 erfüllt. Falls zur direkten Bestimmung des zu messenden Gases kein geeignetes Reagenz für das Prüfröhrchen-Verfahren zur Verfügung steht, jedoch für ein leicht zu bestimmendes Folgeprodukt ein geeignetes Reagenz vorhanden ist, dann kann vorteilhaft hinter der drosselnden Schicht 6 nach Fig. 1 bzw. hinter dem Kapillarrohr 6a nach Fig. 2 die körnige Sorptions- bzw. Reaktionsschicht 8 eingebaut werden, die mit einem Reagenz zur Umwandlung in ein leichter nachweisbares chemisches Folgeprodukt imprägniert ist.

Falls störende Begleitstoffe im zu messenden Prüfgas das Meßergebnis verfälschen und die zu bestimmende Gaskomponente jedoch direkt mit dem Reagenzstreifen 11 reagiert, kann die Sorptions- bzw. Reaktionsschicht 8 als Filter zum selektiven Zurückhalten dieser störenden Begleitstoffe dienen. Hierfür ist dann die Schicht 8 ebenfalls mit einem Reagenz imprägniert, welches mit dem Begleitstoff reagiert und diesen herausfiltert. Die Schicht 8 als Vorschicht vor dem Reagenzstreifen 11 kann bei entsprechender Imprägnierung als Filter und als Umwandlungsschicht für ein neues chemisches Folgeprodukt dienen, wenn dies erforderlich ist.

Zur Messung werden die Enden 2 und 3 des Prüfröhrchens abgebrochen und die Prüfluft mittels einer Luftförderpumpe in Pfeilrichtung 4 durch das offene Prüfröhrchen 1 gesaugt. Dabei durchströmt die Prüfluft zunächst die strömungsdrosselnde Schicht 6 (Fig. 1) bzw. das Kapillarrohr 6a (Fig. 2), dann die Sorptions- bzw. Reaktionsschicht 8, um dann gleichmäßig am Reagenzstreifen 11 vorbeizuströmen. Der empfindliche Reagenzstreifen 11 kann sich auf diese Weise bei Vorhandensein eines entsprechend nachzuweisenden Stoffes zonenförmig verfärben.

## Patentansprüche

1. Prüfröhrchen zur quantitativen Messung kleinster Konzentrationen von Gaskomponenten mit einem mit chemischen Reagenzien imprägnierten Reagenzstreifen (11), vor dem in Durchströmungsrichtung ein gasdurchlässiges, strömungsdrosselndes Element (6, 6a) angeordnet ist, dadurch gekennzeichnet, daß das letztere entweder
   a) eine feinkörnige Schicht (6) aus einem chemisch inerten Material ist, die eine möglichst gleichmäßige Körnung aufweist, oder
   b) ein in das Prüfröhrchen (1) randdicht eingesetztes Kapillarrohr (6a) ist.

2. Prüfröhrchen nach Anspruch 1, dadurch gekennzeichnet, daß die Körnung der Schicht (6) kugelförmig ausgebildet ist.

3. Prüfröhrchen nach Anspruch 1 bis 2, dadurch gekennzeichnet, daß zwischen dem Element (6, 6a) und dem Reagenzstreifen (11) eine körnige Reaktionsschicht (8) angeordnet ist.

4. Prüfröhrchen nach Anspruch 3, dadurch gekennzeichnet, daß die Reaktionsschicht (8) mit einem Reagenz zur Umwandlung der zu bestimmenden Schadstoffkomponenten in ein leichter nachweisbares chemisches Folgeprodukt imprägniert ist.

5. Prüfröhrchen nach Anspruch 3, dadurch gekennzeichnet, daß die Reaktionsschicht (8) mit einem Reagenz imprägniert ist, welches mit einem störenden Begleitstoff reagiert und diesen herausfiltert.

6. Prüfröhrchen nach Anspruch 1, dadurch gekennzeichnet, daß der Reagenzstreifen (11) ein imprägniertes saugfähiges Material ist.

7. Prüfröhrchen nach Anspruch 1, dadurch gekennzeichnet, daß der Reagenzstreifen (11) aus einem nicht-saugfähigen Material besteht, auf dem eine Schicht eines saugfähigen, imprägnierten, feinkörnigen Materials aufgebracht ist.

8. Prüfröhrchen nach Anspruch 1, dadurch gekennzeichnet, daß ein Ende des Reagenzstreifens (11) um ein gasdurchlässiges Element (10) zum Festlegen des Reagenzstreifens in Längsrichtung in dem Prüfröhrchen (1) herumgelegt ist.

## Claims

1. A test tube for the quantitative measurement of minimal concentrations of gaseous components, comprising a reagent strip (11) impregnated with chemical reagents before which in the throughflow direction is arranged a gas-permeable flow-resistor element (6, 6a), characterized in that the latter is either:
   a) a fine-grained layer (6) of a chemically inert material which has as uniform as possible a granulometry, or
   b) a capillary tube (6a) inset with sealed rims in the test tube (1).

2. A test tube according to claim 1, characterized in that the granules of the layer (6) are of spherical shape.

3. A test tube according to claims 1 and 2, characterized in that a granular reactive layer (8) is arranged between the element (6, 6a) and the reagent strip (11).

4. A test tube according to claim 3, characterized in that the reactive layer (8) is impregnated with a reagent for the conversion of the harmful components to be determined into a more easily detectable chemical derivative.

5. A test tube according to claim 3, characterized in that the reactive layer (8) is impregnated with a reagent which reacts with a troublesome impurity and filters it out.

6. A test tube according to claim 1, characterized in that the reagent strip (11) is formed by an impregnated absorbent material.

7. A test tube according to claim 1, characterized in that the reagent strip (11) consists of a non-absorbent material on which is applied a layer of an absorbent, impregnated, fine-grained material.

8. A test tube according to claim 1, characterized in that one end of the reagent strip (11) is laid around a gas-permeable element (10) to secure the reagent strip in the longitudinal direction in the test tube (1).

## Revendications

1. Tube à essai pour la mesure quantitative de très faibles concentrations de composants gazeux, comprenant un ruban réactif (11) imprégné de réactifs chimiques, devant lequel est disposé, dans le sens de l'écoulement, un élément d'étranglement de débit (6, 6a) qui est perméable au gaz, caractérisé en ce que l'élément d'etranglement est, soit
   a) une couche (6) à grain fin d'un matériau chimiquement inerte, présentant une granulométrie aussi uniforme que possible, soit
   b) un tube capillaire (6a) monté de façon étanche aux bords dans le tube à essai (1).

2. Tube à essai selon la revendication 1, caractérisé en ce que les grains de la couche (6) sont sphériques.

3. Tube à essai selon la revendication 1 ou 2, caractérisé en ce qu'une couche de réaction granulaire (8) est disposée entre l'élément d'étranglement (6, 6a) et le ruban réactif (11).

4. Tube à essai selon la revendication 3, caractérisé en ce que la couche de réaction (8) est imprégnée d'un réactif pour transformer les composants nuisibles à doser en un produit chimique consécutif plus facile à déceler.

5. Tube à essai selon la revendication 3, caractérisé en ce que la couche de réaction (8) est imprégnée d'un réactif qui réagit avec une substance d'accompagnement gênante et produit son élimination par filtrage.

6. Tube à essai selon la revendication 1, caractérisé en ce que le ruban réactif (11) est fait d'un matériau absorbant imprégné.

7. Tube à essai selon la revendication 1, caractérisé en ce que le ruban réactif (11) est constitué d'un matériau non absorbant, sur lequel est appliquée une couche de matériau absorbant, imprégné, à grain fin.

8. Tube à essai selon la revendication 1, caractérisé en ce qu'une extrémité du ruban réactif (11) est disposée autour d'un élément (10) perméable au gaz en vue de la fixation du ruban réactif dans le sens de la longueur dans le tube à essai (1).

EP 0 225 520 B1

Fig.1                    Fig.2

2

12

1

11

4

10

9

8

7

6a

6

5

3